# FASCICULE DE BREVET EUROPEEN

(11) **EP 1 312 542 B1**
(45) Date de publication et mention de la délivrance du brevet: **02.08.2006**
(21) Numéro de dépôt: 02405776.2
(22) Date de dépôt: 09.09.2002
(51) Int. Cl.: B62K 25/04, B62K 3/08, B62K 3/10

(54) **Cadre de byciclette articulé et suspendu**
Gelenkiger Aufhängungsrahmen für ein Fahrrad
Articulated suspension frame for bicycle

(30) Priorité: 14.11.2001 FR 0114687
(43) Date de publication de la demande: 21.05.2003
(73) Titulaire: Mottaz, Michel F., 1290 Versoix (CH)
(72) Inventeur: Mottaz, Michel F., 1290 Versoix (CH)
(74) Mandataire: Moinas, Michel

(56) Documents cités:
- FR-A- 2 776 979
- FR-A- 2 808 493
- US-A- 3 448 997

## Description

La présente invention concerne un cadre de bicyclette composé de plusieurs parties mobiles dans le plan vertical et tendues sur un ressort ; solution plus légère que les systèmes de suspensions adaptés au cadre traditionnel, pouvant être conçue comme démontable et susceptible d'améliorer la souplesse et l'efficacité de la transmission.

US 3,448997 décrit une bicyclette avec un cadre léger et robuste, facilement démontable sous forme compacte.

FR-2808493 divulgue une bicyclette de type vélo VTT avec un cadre agencé pour conserver la distance entre la selle et le pédalier quelque soit la réformation du terrain.

L'invention est définie dans la revendication 1. Les revendications dépendantes 2 à 6 définissent des modes de réalisation particuliers.

L'invention est illustrée de façon non limitative par les Figures 1 à 10.
Les Figures 1 à 3, 5, 8 et 9 représentent de façon schématique une vue latérale de différents modes de réalisation et/ou différents aspects de ces modes de réalisation du cadre de bicyclette.
La Figure 4 illustre par une vue latérale schématique le fonctionnement du dispositif de l'invention.
Les Figures 6 et 7 représentent de façon schématique une vue latérale du dispositif de bascule 13 ou du dispositif de glissière 14 prévu au point de jonction entre la flèche 2 et le levier 3 pour le mode de réalisation de la Figure 5.
La Figure 10 représente de façon schématique une vue de devant du guidon 16 et de l'axe de fourche télescopique du mode de réalisation des Figures 8 et 9.

Le principe de base est une pièce rigide 1, appelé ci-après « arc 1 », dont une extrémité repose sur l'axe de la roue arrière et dont l'autre s'articule avec le guidon.

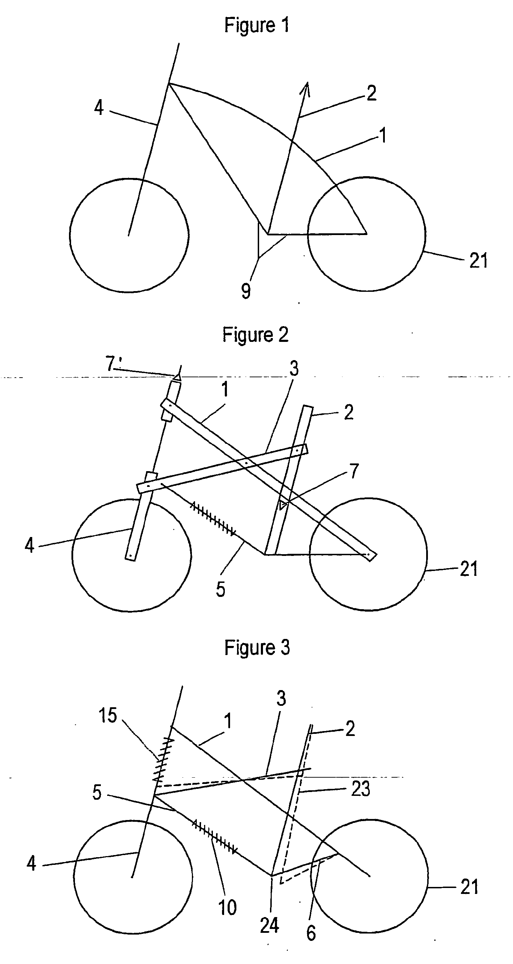

Sur l'organe 9, appelé ci-après « corde ou hauban 9», repose une structure verticale à laquelle sont fixés la selle 20 et le pédalier 8 et qui supporte donc le poids du cycliste. La mobilité de cette structure est comparable à celle de la flèche 2 d'un arc, pointée vers le haut, étant supposé que l'arc est rigide et que c'est l'élasticité de la corde qui autorise le mouvement de suspension (figure 1).

Bien entendu, l'arc 1 se dédouble en largeur pour laisser passer la flèche 2 et pour venir s'appuyer sur la roue arrière 21 de la bicyclette.

A l'avant, l'arc 1 est doté d'un levier 3 qui le croise horizontalement à la hauteur de son tiers supérieur et qui s'y articule à la manière d'un compas dont les deux branches sont de longueurs identiques. Ce levier 3 sert de bras de suspension à la fourche 4 et c'est à lui qu'est fixée la corde de suspension 9.

Le prolongement supérieur de la fourche 4 vient glisser passivement dans un guide ménagé à l'intérieur du guidon 16. Celui-ci lui permet de garder son angulation tout en lui autorisant un mouvement vertical (axe de fourche télescopique).

Sur la figure 2, le prolongement postérieur du levier 3 vient s'articuler à la partie supérieure de la flèche 2 et contribue à la cohésion du tout.

Pour ce qui est de la corde ou hauban 9, il faut en distinguer 2 parties :
1) La partie extensible 5, qui relie le levier 3 au pédalier 8 et dont l'extensibilité conditionne simultanément la suspension avant et la suspension arrière. En pratique, l'extensibilité est assurée par un ressort 10 ou toute autre structure extensible.
2) La partie rigide 6, qui relie le pédalier 8 à la partie arrière de l'arc 1, et qui n'est pas extensible. Préférentiellement, la partie rigide est articulée à ses 2 extrémités.

Une fois le ressort 10 tendu, une butée 7 retient la flèche 2 vers le haut en ne lui autorisant qu'un mouvement de recul vers le bas (représentée par un triangle sur le dessin ; diverses localisations sont possibles).

La figure 3 illustre la manière dont le cadre se déforme sous l'effet d'un poids appliqué sur la bicyclette, le cadre déformé est représenté en pointillés. Elle montre qu'il est possible d'ajouter en dessous du guidon un deuxième ressort 15 qui agira en synergie avec le premier 10. A noter encore le basculement de la partie rigide 6 reliant la partie arrière de l'arc au pédalier ; ainsi, le pédalier et l'extrémité de la partie rigide 6 à laquelle il est relié, se rapproche de la roue lors de la flexion du cadre.

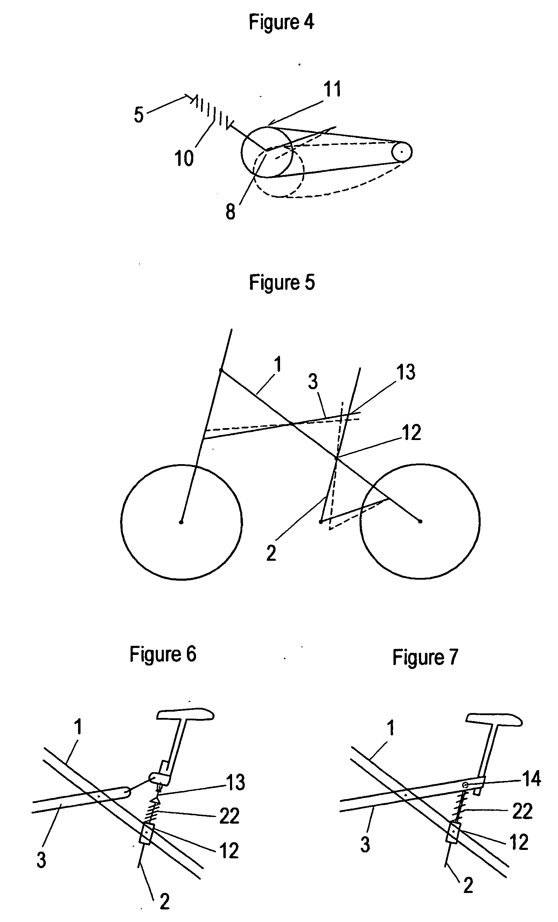

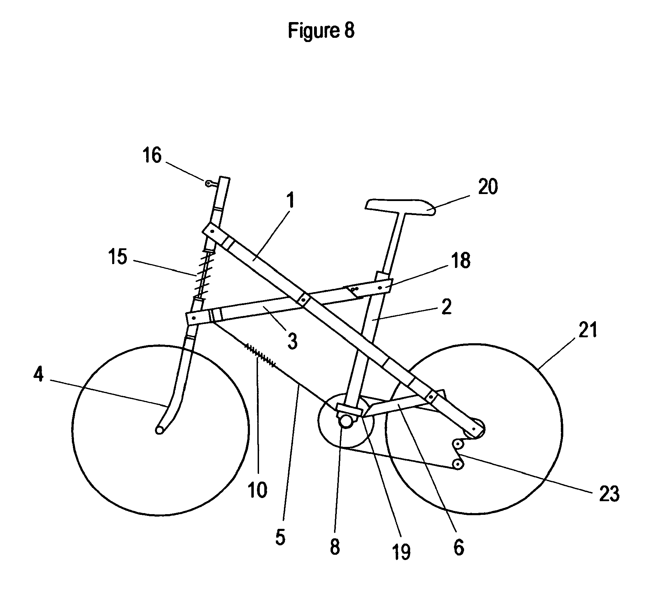

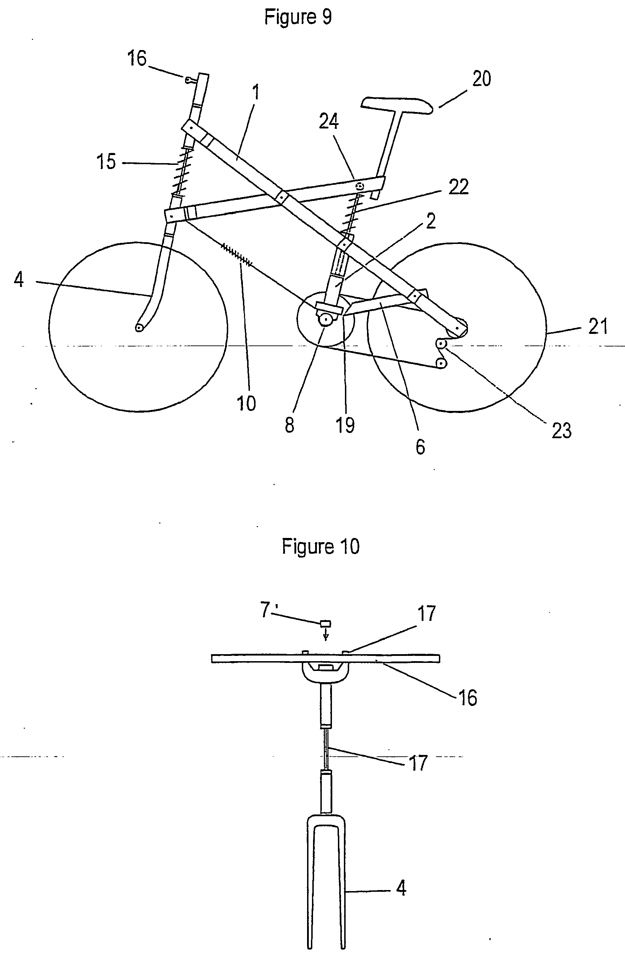

Le but de ce dispositif est expliqué à la figure 4 : l'énergie absorbée par le ressort 10 sous l'effet du poids ou des efforts du cycliste est restituée sous forme d'une traction sur la chaîne lorsque le pédalier 8 revient à sa position d'origine. Le système est complété par un tendeur de chaîne 23, par exemple, celui du dérailleur représenté sur les figures 8 et 9. Le cliquet 11, représenté sur la figure 4, et bloquant la rotation inverse du plateau est facultatif car en pratique l'appui constant des pieds du cycliste sur les pédales est suffisant pour assurer la fonction de blocage. En revanche, ce moyen de blocage peut s'avérer très utile sur des terrains accidentés.

La figure 5 illustre un autre mode de réalisation du cadre articulé. Dans le premier mode de réalisation représenté sur les figures 2 et 3, le mouvement de la flèche 2 vers le bas est déterminé par les deux points de rotation fixes 23 et 24 situés à ses extrémités et son déplacement à l'intérieur de l'arc 1 se fait librement le long d'un plan de glissement qui lui autorise un léger mouvement de translation vers l'arrière. Dans le deuxième mode de réalisation représenté sur la figure 5, la flèche 2 passe à travers un guide 12 fixé à l'arc 1 par un axe transversal qui bloque tout déplacement antéropostérieur ; par compensation, un dispositif de bascule 13 ou de glissière 14 est prévu au point de jonction entre la flèche 2 et le levier 3, comme cela est représenté sur les figures 6 et 7 respectivement.

Ce mode de réalisation a l'avantage de mieux stabiliser la flèche 2 et de limiter les frottements ; elle permet également l'insertion d'un troisième ressort 22 dont la résistance s'ajoute à celle des deux autres.

La figure 8 présente un mode de réalisation composé de portions de tubes en aluminium à section rectangulaire. Ces pièces sont découpées et assemblées à l'aide de rivets (non représentés sur le dessin) pour constituer les 3 parties principales du cadre (1, 2 et 3) ; celles-ci étant articulées entre elles grâce à des axes démontables.

La fourche 4 et le guidon 16 sont empruntés à un vélo traditionnel ; dans l'axe creux de la fourche est fixée une tige cannelée 17 qui vient coulisser dans un guide placé lui-même dans l'axe du guidon 16. Celui-ci peut être fabriqué à l'aide d'une fourche du même type retournée sur elle-même et dont les 2 branches ont été sciées ; le reste servant de support au guidon 16 proprement dit. Ces 2 pièces sont fixées au cadre grâce à des colliers munis de supports latéraux servant d'axes de rotation.

La cage du pédalier 8 est attachée au cadre avec des bagues de serrage fixées sur des équerres.

La liaison entre la flèche 2 et le levier 3 est assurée par une pièce intermédiaire amovible 18, vissée sur le levier 3 et permettant au cadre d'être entièrement démontable.

La partie rigide 6 est constituée d'une pièce en U dont les 2 branches parallèles passent suffisamment près de la roue pour ne pas empiéter sur le trajet de la chaîne ; sa base est rattachée au pédalier par une charnière 19 (démontable) et ses 2 branches à la fourche arrière par un rivet mobile de chaque côté.

Sur la figure 10, la butée 7' qui permet de maintenir le ressort 10 sous tension est une bague fixée à la tige cannelée 17, ou axe de fourche télescopique, au dessus du guidon 16 ; elle est réglable en hauteur.

Le modèle représenté à la figure 9 est identique au précédent mais utilise le deuxième mode de réalisation représenté sur la figure 4. Cela sous-entend que la flèche 2 est remplacée par un axe du même type que la tige cannelée 17, solidaire du pédalier, traversant un guide ne lui autorisant qu'un mouvement vertical et aboutissant à une glissière à roulette 24 ménagée dans le levier 3 ; la selle 20 étant alors fixée sur l'extrémité postérieure du levier 3. Le troisième ressort 22 placé en dessous de la glissière 3 a le triple avantage d'amortir le jeu du roulement, de renforcer la suspension et de diminuer la charge reposant sur l'axe principal du cadre.

Le principe des cadres décrits ci-dessus devrait être applicable à tous types de cycles, y compris des cycles à moteurs.

## Revendications

1. Cadre de bicyclette ou tout autre véhicule à 2 roues, ledit cadre étant constitué d'unepièce rigide (1) reliant le guidon (16) à la roue arrière, d'une flèche (2), mobile verticalement à travers la pièce rigide (1), reliant la selle au pédalier et d'un levier (3) fixé à la pièce rigide (1) et servant de levier entre la flèche (2) et la fourche (4) avant, cette dernière étant reliée au guidon (16) par une tige cannelée (17), le pédalier (8) reposant sur un organe (9) tendu entre l'extrémité antérieure du levier (3) et l'extrémité postérieure de la pièce rigide (1), l'organe (9) comportant une partie extensible (5) en avant du pédalier (8) et une partie rigide (6) en arrière du pédalier ; une butée (7) placée sur la flèche(2) retenant celle-ci vers le haut en ne lui autorisant qu'un mouvement de recul vers le bas.

2. Cadre selon la revendication 1, dans lequel un ressort (15) est placé sur la tige cannelée (17) entre le guidon (16) et la fourche (4).

3. Cadre selon la revendication 1 ou 2, dans lequel la partie rigide (6) est raccourcie de façon à ce que le pédalier (8) se rapproche de la roue arrière (21) lors de la flexion du cadre, qu'il comprend un tendeur de chaîne et, éventuellement, un dispositif (11) bloquant la rotation arrière du plateau.

4. Cadre selon les revendications 1 à 3, dans lequel l'excursion de la flèche (2) à travers la pièce rigide (1) est limitée par un guide fixé à la pièce rigide (1), et qu'il comprend un système de glissière (13) ou de charnière (14) entre la flèche (2) et le levier (3) .

5. Cadre selon la revendication 4, dans lequel un ressort (22) est placé sur la flèche (2) entre la pièce rigide (1) et le levier (3).

6. Cadre selon les revendications 1 à 5, ledit cadre étant construit à l'aide de tubes à section rectangulaire et de rivets.

## Claims

1. Frame for a bicycle or any other vehicle with two wheels, said frame being made up of a rigid part (1) connecting the handlebars (16) to the rear wheel, a shaft (2), vertically mobile across the rigid part (1), connecting the saddle to the pedal mechanism, and a lever (3) fixed to the rigid part (1) and serving as a lever between the shaft (2) and the front fork (4), said front fork being connected to the handlebars (16) by a grooved rod (17), the pedal mechanism (8) resting on a member (9) stretched between the front end of the lever (3) and the rear end of the rigid part (1), the member (9) comprising an extendable part (5) in front of the pedal mechanism (8) and a rigid part (6) to the rear of the pedal mechanism; a stop (7) placed on the shaft (2) upwardly retaining said shaft by only allowing a downward reverse movement thereof.

2. Frame according to Claim 1, in which a spring (15) is placed on the grooved rod (17) between the handlebars (16) and the fork (4).

3. Frame according to Claim 1 or 2, in which the rigid part (6) is shortened such that the pedal mechanism (8) moves closer to the rear wheel (21) when the frame flexes, and that it comprises a chain tensioner and, possibly, a device (11) blocking the rearward rotation of the chain wheel.

4. Frame according to Claims 1 to 3, in which the movement of the shaft (2) across the rigid part (1) is limited by a guide fixed to the rigid part (1) and that it comprises a slide (13) or hinge (14) system between the shaft (2) and the lever (3).

5. Frame according to Claim 4, in which a spring (22) is placed on the shaft (2) between the rigid part (1) and the lever (3).

6. Frame according to Claims 1 to 5, said frame being constructed by means of tubes of rectangular section and rivets.

## Patentansprüche

1. Rahmen eines Fahrrades oder jeglichen anderen Zweiradfahrzeugs, der aus einem die Lenkstange (16) mit dem Hinterrad verbindenden starren Teil (1), einem senkrecht über das starre Teil (1) hinweg beweglichen Ausleger (2), der den Sattel mit dem Tretlager verbindet, sowie einem an dem starren Teil (1) befestigten Hebel (3) besteht, der als Hebel zwischen dem Ausleger (2) und der vorderen Gabel (4) dient, wobei letztere mit der Lenkstange (16) durch eine kannelierte Stange (17) verbunden ist, das Tretlager (8) auf einem zwischen dem vorderen Ende des Hebels (3) und dem hinteren Ende des starren Teils (1) gespannten Organ (9) ruht, das einen ausziehbaren Abschnitt (5) vor dem Tretlager (8) und einen starren Abschnitt (6) hinter dem Tretlager umfasst; und ein auf den Ausleger (2) aufgesetzter Anschlag (7) diesen nach oben hin zurückhält und ihm nur eine Rückstellbewegung nach unten hin erlaubt.

2. Rahmen nach Anspruch 1, worin eine Feder (15) auf die kannelierte Stange (17) zwischen der Lenkstange (16) und der Gabel (4) aufgesetzt ist.

3. Rahmen nach Anspruch 1 oder 2, worin der starre Abschnitt (6) so verkürzt ist, dass sich das Tretlager (8) bei Durchbiegung des Rahmens dem Hinterrad (21) nähert, wobei der Rahmen einen Kettenspanner sowie eventuell eine Vorrichtung (11) umfasst, die ein Zurückdrehen des Kettenrades blockiert.

4. Rahmen nach Ansprüchen 1 bis 3, worin die Bewegung des Auslegers (2) über das starre Teil (1) hinweg durch eine am starren Teil (1) befestigte Führung begrenzt wird, wobei der Rahmen ein System aus Gleitschiene (13) oder Scharnier (14) zwischen dem Ausleger (2) und dem Hebel (3) umfasst.

5. Rahmen nach Anspruch 4, worin eine Feder (22) zwischen dem starren Teil (1) und dem Hebel (3) auf den Ausleger (2) aufgesetzt ist.

6. Rahmen nach Ansprüchen 1 bis 5, der mit Hilfe von Rohren eines rechteckigen Querschnitts und von Nieten konstruiert ist.
